# EUROPÄISCHE PATENTANMELDUNG

(11) **EP 1 067 038 A1**
(43) Veröffentlichungstag der Anmeldung: **10.01.2001**
(21) Anmeldenummer: 99113579.9
(22) Anmeldetag: 08.07.1999
(51) Int. Cl.: B62D 21/12, B62D 21/20, B62D 53/06

(54) **Anhängefahrzeug**

(71) Anmelder: Kögel Fahrzeugwerke Aktiengesellschaft, D-89079 Ulm (DE)
(72) Erfinder: Seitz, Anton, 89250 Senden-Wullenstetten (DE); Volz, Siegfried, 89610 Oberdischingen (DE); Wiehler, Matthias, 89250 Senden-Wullenstetten (DE); Weigand, Jürgen, 89079 Ulm-Wiblingen (DE)
(74) Vertreter: HOFFMANN - EITLE

(57) **Zusammenfassung**

Die Erfindung betrifft ein Anhängefahrzeug (F) mit einer langgestreckten Tragrahmenstruktur (2), wobei die Tragrahmenstruktur (2) modulartig (M1, M2, M3, M4, M5) aufgebaut ist und mindesten zwei vorgefertigte Rahmenstrukturmodule (M1, M2, M3, M4, M5) aufweist, die miteinander verbunden (6) sind.

## Beschreibung

Die vorliegende Erfindung betrifft ein Anhängefahrzeug gemäß dem Oberbegriff des Anspruchs 1.

Unter einem Anhängefahrzeug versteht man im allgemeinen ein nicht selbstfahrendes Straßenfahrzeug, z.B. in der Form eines Starr-Deichselanhängers, Gelenk-Deichselanhängers, Zentralachsanhängers, Sattelanhängers, Lastanhängers und dergleichen, das von einer Zugmaschine, z.B. von einer Sattelzugmaschine, geschleppt wird. Ein derartiges Anhängefahrzeug besitzt eine langgestreckte Tragrahmenstruktur, die das eigentliche Tragwerk des Fahrzeugs bildet. Bei dieser Tragrahmenstruktur handelt es sich üblicherweise um einen aus zwei oder mehreren durchgehenden Längsträgern sowie daran fixierten Querträgern bestehenden Leiterrahmen. Eine solche konventionelle Tragrahmenstruktur ist beispielsweise in der Publikation "Kraftfahrtechnisches Taschenbuch", Bosch, 22. Aufl., ISBN 3-18-419122-2, Seiten 695 und 696 offenbart. Bei den bisher bekannten Anhängerfahrzeugen werden Tragrahmenstrukturen speziell für einen bestimmten Anhängefahrzeugtyp konzipiert und ausgelegt. Der konstruktive und fertigungstechnische Aufwand ist für solche Anhängefahrzeuge, insbesondere bei Kleinserien, demzufolge sehr hoch und entsprechend kostenintensiv.

Der Erfindung liegt daher die Aufgabe zugrunde, ein Anhängefahrzeug mit einer langgestreckten Tragrahmenstruktur zu schaffen, das auch in einer größeren Typenvielfalt auf vergleichsweise einfache und effektive Art und Weise herstellbar ist.

Die vorhergenannte Aufgabe wird gelöst durch ein erfindungsgemäßes Anhängefahrzeug mit den Merkmalen des Anspruchs 1. Dieses Anhängefahrzeug mit einer langgestreckten Tragrahmenstruktur ist dadurch gekennzeichnet, daß die Tragrahmenstruktur modulartig aufgebaut ist und mindestens zwei vorgefertigte Rahmenstrukturmodule aufweist, die miteinander verbunden sind. Je nach Ausführungsform und Länge der Tragrahmenstruktur sind natürlich auch mehr als die zwei vorhergenannten Rahmenstrukturmodule einsetzbar. Die Rahmenstrukturmodule selbst können gleichartig oder aber unterschiedlich ausgestaltet sein und darüber hinaus auch unterschiedliche Abmessungen besitzen. Mit anderen Worten kann die Tragrahmenstruktur im Sinne der Erfindung sowohl gleiche als auch unterschiedliche Modultypen aufweisen. Die einzelnen Rahmenstrukturmodule können lösbar oder unlösbar aneinander fixiert sein, wobei die lösbare Verbindung ein Austausch des jeweiligen Moduls, auch gegen einen anderen Modultyp, ermöglicht. Die Erfindung umfaßt zudem Rahmenstrukturmodule, die sich im miteinander verbundenen Zustand zumindest teilweise überlappen und/oder die mit bestimmten Modulabschnitten ineinandergreifen. Das erfindungsgemäße Anhängefahrzeug ist üblicherweise mit tragfähigen Bodenflächenelementen sowie einem Aufbau (z.B. einem Koffer- oder Pritschenaufbau) versehen, dessen Form und Ausstattung je nach Anwendungsfall erheblich variieren kann.

Das erfindungsgemäße Anhängefahrzeug ist auf Grund seiner modulartigen Tragrahmenstruktur und der Verwendung von vorgefertigten Rahmenstrukturmodulen mit geringem Zeitaufwand und hoher Wirtschaftlichkeit herstellbar. Durch die Bereitstellung einer begrenzten Anzahl von vorgefertigten Rahmenstrukturmodulen ist es hierbei möglich, eine Vielzahl unterschiedlichster Anhängefahrzeugtypen und/oder -größen mit geringem konstruktivem und fertigungstechnischen Aufwand zu produzieren. Somit lassen sich insbesondere auch individuelle Konstruktionen und Kleinserien sehr rationell und damit kostengünstiger fertigen. Durch das modulare, baukastenartige Tragrahmenstrukturkonzept ist das erfindungsgemäße Anhängefahrzeug darüber hinaus flexibler an unterschiedliche Anforderungsprofile anzupassen.

Ein vorteilhaftes Ausgestaltungsmerkmal der Erfindung sieht vor, daß jedes Rahmenstrukturmodul mindestens ein langgestrecktes Haupttragelement besitzt, das einen wesentlichen Anteil einer auf das Rahmenstrukturmodul wirkenden Belastung aufnimmt, und das mit mindestens einem lastübertragenden Verbindungselement versehen ist, welches an wenigstens ein korrespondierendes Verbindungselement des jeweils benachbarten Rahmenstrukturmoduls anschließbar ist. Das Haupttragelement ist vorzugsweise in Form einer selbsttragenden Träger- und/oder Gitterkonstruktion ausgeführt, die ein oder mehrere Bauteile umfaßt. Das Haupttragelement dient nicht nur zur Aufnahme der aus dem Eigengewicht und einem auf dem Anhängefahrzeug geladenen Transportgut resultierenden Last, sondern auch von dynamischen Belastungen, wie sie beispielsweise durch das Schleppen des Anhängefahrzeugs mittels einer Zugmaschine und durch fahrzeugzustandsbedingte Einflüsse entstehen. Das mindestens eine Verbindungselement dient zur Aufnahme und Übertragung von Biegemomenten, Torsionsmomenten, Querkräften und Zug-/Druckkräften von einem Rahmenstrukturmodul auf ein benachbartes Rahmenstrukturmodul, wobei ein einzelnes Verbindungselement jedoch nicht zwingenderweise sämtliche der vorhergenannten Belastungen übertragen muß. Das Verbindungselement kann im Sinne der Erfindung ferner auch Zentrierelemente und/oder Ausrichtungshilfen und/oder Schweißnahtvorbereitungsabschnitte oder dergleichen aufweisen, welche die Montage und das Zusammenfügen der einzelnen Rahmenstrukturmodule erleichtern. Durch die vorhergenannten Merkmale wird auf vorteilhafte Art und Weise sichergestellt, daß jedes Rahmenstrukturmodul eine einzelne stabile Einheit bildet, die wiederum in vielfältigen Kombinationen zu einer soliden Tragrahmenstruktur zusammensetzbar ist.

Vorzugsweise erstreckt sich das Haupttragelement über im wesentlichen die gesamte Modullänge, so daß eine wirksame Stabilität und Tragfähigkeit eines einzelnen Rahmenstrukturmoduls sichergestellt und eine leichte Koppelung der Haupttragelemente benachbarter Rahmenstrukturmodule gewährleistet ist. In einer anderen positiven Ausgestaltungsvariante des erfindungsgemäßen Anhängefahrzeugs ist das Haupttragelement als ein Einzelträgerelement ausgebildet, das sich im wesentlichen mittig in dem Rahmenstrukturmodul erstreckt. Das Einzelträgerelement kann hierbei als einstückiges Bauteil ausgeführt oder aber aus mehreren Einzelteilen zusammengesetzt sein. Die mittige Anordnung des Einzelträgerelements ist vorzugsweise derart, daß das Einzelträgerelement bei Betrachtung eines Rahmenstrukturmoduls in der Draufsicht auf der Mittellängsachse des Rahmenstrukturmoduls liegt. Durch diese Konfiguration können beispielsweise die seitlich des Einzelträgerelementes befindlichen Flächen und/oder Räume des Rahmenstrukturmoduls für die Anordnung und/oder Unterbringung anderer Bauteile und/oder Gegenstände genutzt werden.

Besitzt das mittige Einzelträgerelement wenigstens einen gabel-, klauen- oder schlaufenförmigen Endabschnitt, so lassen sich in diesem Endabschnitt bevorzugt besonders hoch beanspruchte Bauteile anordnen und die über diese Bauteile und den Endabschnitt angreifenden Belastungen konstruktiv besonders günstig in das Einzelträgerelement einleiten. Für bestimmte Anwendungsfälle ist es auch vorgesehen, das Haupttragelement rahmenförmig auszugestalten. Diese Konstruktion ist besonders zur Aufnahme von hohen Belastungen und zur Anbringung von etwaigen Anbauteilen geeignet.

Gemäß einem wiederum anderen bevorzugten Ausgestaltungsmerkmal des erfindungsgemäßen Anhängefahrzeugs weist das Haupttragelement wenigstens zwei in Modulbreitenrichtung voneinander beabstandete Längsträgerelemente aus. Diese sind in der Regel durch Querträger miteinander verbunden, so daß sich ein leiterrahmenartiger Aufbau ergibt.

In einer noch anderen bevorzugten Ausführungsvariante des erfindungsgemäßen Anhängefahrzeugs besitzt das Haupttragelement bei Betrachtung des Rahmenstrukturmoduls in der Draufsicht eine im wesentlichen T-förmige Gestalt, mit einem Längsschenkel, der sich mittig über im wesentlichen die gesamte Modullänge erstreckt, und einem Querschenkel, der in einem vorderen und/oder hinteren Modulbereich angeordnet ist. Hierbei eignet sich der Längsschenkel besonders zur Anbindung an ein Einzelträgerelement und der Querschenkel insbesondere zur Anbindung an zwei oder mehrere Trägerelemente eines jeweils benachbarten Rahmenstrukturmoduls.

Das Haupttragelement kann bei Betrachtung des Rahmenstrukturmoduls in der Draufsicht jedoch auch eine im wesentliche dreieckige oder trapezförmige Gestalt besitzen, mit einem an einem vorderen oder hinteren Modulbereich angeordneten Querschenkel und zwei sich jeweils an den Querschenkel anschließenden, zusammenlaufenden Längsschenkel. Auch diese Konstruktion ist für eine Anbindung an bestimmte Haupttragelementformen von gleichartigen oder unterschiedlichen Rahmenstrukturmodulen gut geeignet und trägt zur Einsatzvielfalt des jeweiligen Moduls bei.

Gemäß einem weiteren vorteilhaften Ausgestaltungsmerkmal der Erfindung ist das mindestens eine lastübertragende Verbindungselement an einem vorderen und /oder hinteren Endabschnitt des Haupttragelementes vorgesehen. Diese Anordnung gewährleistet bei der Montage der Tragrahmenstruktur des erfindungsgemäßen Anhängefahrzeugs eine leichte Montage benachbarter Rahmenstrukturmodule. Bei Haupttragelementen, die mit Querträgerelementen ausgestattet sind, können an einer Haupttragelementseite selbstverständlich auch zwei oder mehrere lastübertragende Verbindungselemente, z.B. zwei in Modulbreitenrichtung voneinander beabstandete Verbindungselemente, vorgesehen sein.

Vorzugsweise handelt es sich bei dem lastübertragenden Verbindungselement um eine Schweiß- und/oder Schraub- und/oder Bolzen- und/oder Nietverbindung. In Abhängigkeit der jeweils an die Tragrahmenstruktur gestellten Anforderungen kann somit eine feste und sichere lösbare oder unlösbare Verbindung zwischen zwei benachbarten Rahmenstrukturmodulen hergestellt werden.

In einer weiteren Ausführungsform des erfindungsgemäßen Anhängefahrzeugs besitzt jedes Rahmenstrukturmodul mindestens ein Nebentragelement, daß einen geringfügigeren Anteil der auf das jeweilige Rahmenstrukturmodul wirkenden Belastung aufnimmt. Dieses Nebentragelement ist in der Regel mit dem Haupttragelement verbunden, z.B. durch eine Verschraubung, Vernietung, Verschweißung oder dergleichen. Das Nebentragelement kann sowohl zur Aussteifung des Haupttragelementes und damit der gesamten Tragrahmenstruktur als auch zur Anbringung von Zusatzbauteilen dienen.

Gemäß einer weiteren bevorzugten Ausführungsvariante eines in Form eines Sattelaufliegers ausgebildeten Anhängefahrzeugs ist das erste Rahmenstrukturmodul als ein in Fahrtrichtung des Anhängefahrzeugs vorderstes Aufsattelmodul ausgestaltet, das einen Königszapfen aufweist, der mit dem Haupttragelement verbunden ist. Als Haupttragelement eignet sich hier besonders das mit dem gabel-, klauen- oder schlaufenförmigen Endabschnitt ausgestattete Einzelträgerelement, wobei der Endabschnitt den Königszapfen zumindest teilweise umschließt. Ebenso sind natürlich auch andere geeignete Königszapfenlagerungen denkbar. Bei dem Aufsattelmodul verjüngt sich das Haupttragelement vorzugsweise auch von seinem rückwärtigen Ende zu dem Königszapfen hin, bzw. ist abgewinkelt ausgebildet, so daß eine für das Aufliegen des Sattelaufliegers auf einer Königsplatte eines Sattelzugfahrzeugs vorbestimmte Rahmenhalshöhe entsteht. Das Aufsattelmodul ist zur Herstellung unterschiedlichster Tragrahmenstrukturen unter Verwendung anderer Rahmenstrukturmodule geeignet.

Ist das Anhängefahrzeug hingegen in Form eines Deichselanhängers ausgebildet, so wird das erste Rahmenstrukturmodul zweckmäßigerweise als ein in Fahrtrichtung vorderes Deichselmodul ausgestaltet, das eine starr oder gelenkig ankuppelbare Deichsel aufweist. Dieses Deichselmodul kann selbstverständlich bei Bedarf mit einem lenkbaren Fahrwerk ausgestattet sein. Auch das Deichselmodul ist vorteilhaft mit anderen Rahmenstrukturmodulen kombinierbar.

Ein weiteres vorteilhaftes Ausgestaltungsmerkmal des erfindungsgemäßen Anhängefahrzeugs sieht vor, daß das zweite Rahmenstrukturmodul als Fahrwerkmodul ausgestaltet ist, das ein an dem Haupttragelement befestigtes ein- oder mehrachsiges Fahrwerk aufweist. Dieses Fahrwerk wiederum kann mit Starrachsen, Lenkachsen, mit Greifzangenleisten für den Huckepackverkehr, sowie mit einer Einfach-, oder Zwillingsbereifung ausgestattet sein.

Es hat sich auch als vorteilhaft herausgestellt, daß die Tragrahmenstruktur in wenigstens einer Variante des erfindungsgemäßen Anhängefahrzeugs ein drittes Rahmenstrukturmodul aufweist, das als Palettenkastenmodul ausgestaltet ist. Dieser Modultyp besitzt vorzugsweise ein T-förmiges Haupttragelement oder ein Haupttragelement in der Art eines sich mittig durch das Palettenkastenmodul erstreckenden Einzelträgers, so daß in dem kastenförmigen Modul seitliche Freiräume beziehungsweise Abteile zur Unterbringung von Gegenständen, insbesondere von Paletten, entstehen. Dieser Modultyp ist besonders vorteilhaft mit anderen Rahmenstrukturmodulen kombinierbar und erweitert die Nutzungsmöglichkeiten und mögliche Typenvielfalt des erfindungsgemäßen Anhängefahrzeugs.

Das Palettenkastenmodul ist besonders günstig zwischen dem ersten Rahmenstrukturmodul und dem Fahrwerkmodul anzuordnen.

Auch hat es sich als vorteilhaft erwiesen, das Palettenkastenmodul mit zwei seitlichen Aufnahmeöffnungen auszustatten, die vorzugsweise durch eine Klappe oder entsprechende Seitenwände verschließbar ausgestaltet sind. Diese Klappen oder Seitenwände können gleichzeitig als Unterfahrschutz dienen.

Erfindungsgemäß ist des weiteren vorgesehen, daß die Tragrahmenstruktur wenigstens ein viertes Rahmenstrukturmodul besitzt, das als Staukastenmodul ausgestaltet ist. Auch dieser Modultyp besitzt vorzugsweise ein mittig angeordnetes oder T-förmig gestaltetes Haupttragelement.

Das Staukastenmodul ist besonders vorteilhaft als das rückwärtige Rahmenstrukturmodul der Tragrahmenstruktur zu verwenden und ist hierbei zweckmäßigerweise an dem Fahrwerkmodul angeordnet. Das Staukastenmodul kann beispielsweise zur Unterbringung von Ersatzrädern sowie zur Anbringung von weiteren Rahmenendteilen, wie z.B. einer Ladebordwand oder einer Halterung für einen Mitnahmestapler dienen. In diesem Zusammenhang hat es sich auch bewährt, das Staukastenmodul mit zwei seitlichen und/oder zwei hinteren Aufnahmeöffnungen auszustatten, die in der Regel durch Klappen oder Seitenwände, die gleichzeitig als Unterfahrschutz fungieren können, verschließbar sind.

Schließlich sieht ein weiters vorteilhaftes Ausgestaltungsmerkmal des erfindungsgemäßen Anhängefahrzeugs vor, daß die Tragrahmenstruktur wenigstens ein fünftes Rahmenstrukturmodul besitzt, das als Zwischenmodul ausgestaltet ist. Dieses Zwischenmodul ist grundsätzlich zwischen zwei beliebige benachbarte Rahmenstrukturmodule einsetzbar und trägt somit zur Typenvielfalt einer aus den vorgefertigten Rahmenstrukturmodulen herstellbaren Tragrahmenstruktur bei.

Besonders günstig ist das Zwischenmodul zwischen dem Fahrwerkmodul und dem Staukastenmodul, und/oder dem Fahrwerkmodul und dem Palettenkastenmodul, und/oder dem Palettenkastenmodul und dem ersten Rahmenstrukturmodul anzuordnen.

Ein bevorzugtes Ausführungsbeispiel der Erfindung mit zusätzlichen Ausgestaltungsdetails und weiteren Vorteilen ist nachfolgend unter Bezugnahme auf die beigefügten Zeichnungen näher beschrieben und erläutert. Es zeigt:
- Fig. 1: eine schematische Seitenansicht eines erfindungsgemäßen Anhängefahrzeugs;
- Fig. 2: eine schematische Draufsicht einer Tragrahmenstruktur des erfindungsgemäßen Anhängefahrzeugs nach Fig. 1;
- Fig. 3: eine schematische Querschnittsansicht entlang der Linie III-III von Fig. 1;
- Fig. 4: eine schematische Querschnittsansicht entlang der Linie IV-IV von Fig. 1;
- Fig. 5: eine schematische Querschnittsansicht entlang der Linie V-V von Fig. 1;
- Fig. 6: eine schematische Querschnittsansicht entlang der Linie VI-VI von Fig. 1; und
- Fig. 7: eine schematische Draufsicht eines Zwischenmoduls des erfindungsgemäßen Anhängefahrzeugs.

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

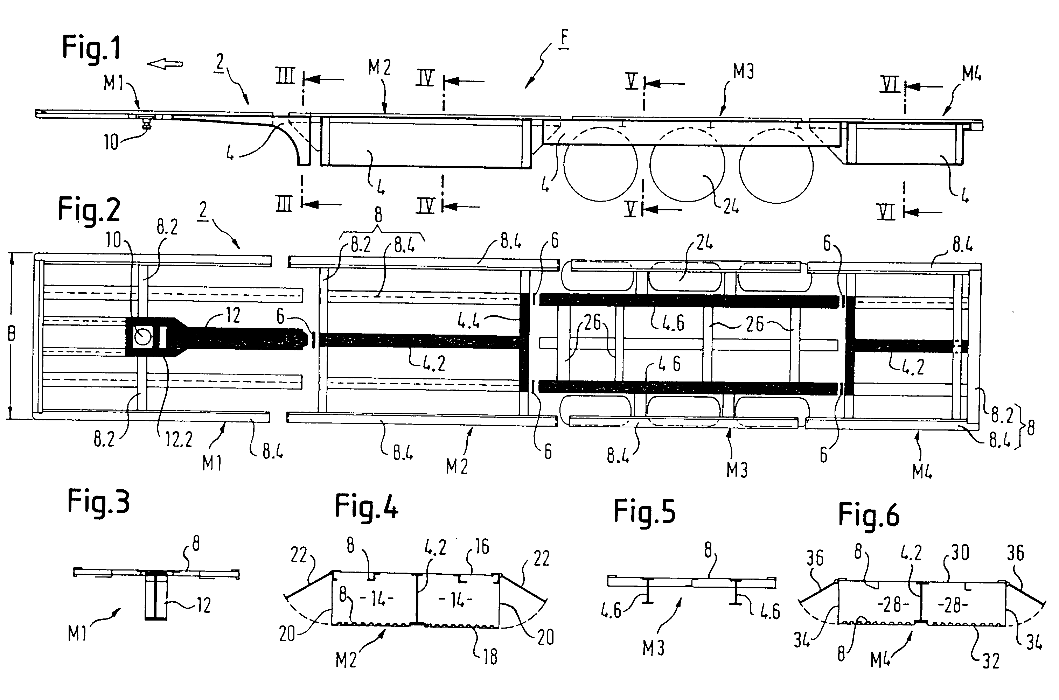

Die Fig. 1 zeigt eine schematische Seitenansicht eines Ausführungsbeispiels eines erfindungsgemäßen Anhängefahrzeugs F, das im vorliegenden Fall als Sattelauflieger ausgestaltet ist, der in Verbindung mit einem nicht dargestellten Sattelzugfahrzeug betrieben wird. Das Anhängefahrzeug F besitzt eine langgestreckte, modulartig aufgebaute Tragrahmenstruktur 2 mit vier verschiedenen vorgefertigten Rahmenstrukturmodulen M1 - M4, die im fertiggestellten Zustand der Tragrahmenstruktur 2 fest miteinander verbunden sind.

In der Fig. 2 ist eine schematische Draufsicht der Tragrahmenstruktur 2 des Anhängefahrzeugs F nach Fig. 1 erkennbar. Sowohl in Fig. 1 als auch in Fig. 2 sind die einzelnen Rahmenstrukturmodule M1 - M4 in einem voneinander getrennten Zustand dargestellt, so daß die einzelnen Rahmenstrukturmodule M1 - M4 leichter voneinander zu unterscheiden sind. Wie aus den Fig. 1 und 2 ersichtlich ist, besitzt jedes Rahmenstrukturmodul M1 - M4 ein durch eine dicke durchgehende Linie kenntlich gemachtes langgestrecktes Haupttragelement 4, das sich im wesentlichen über die gesamte Modullänge erstreckt. Das Haupttragelement 4 nimmt einen wesentlichen Anteil der auf ein jeweiliges Rahmenstrukturmodul M1 - M4 wirkenden statischen und dynamischen Belastungen, wie z.B. Biegemomente, Torsionsmomente, Querkräfte, Zugkräfte, Druckkräfte usw. auf und ist mit einem oder mehreren lastübertragenden Verbindungselementen 6 versehen, welche an ein oder mehrere korrespondierende Verbindungselemente 6 des jeweils benachbarten Rahmenstrukturmoduls anschließbar sind. Auf diese Weise werden die Rahmenstrukturmodule M1 - M4 zu der Tragrahmenstruktur 2 zusammengefügt. Als lastübertragende Verbindungselemente 6 dienen im vorliegenden Fall Schweißverbindungen, die jeweils an einem vorderen bzw. hinteren Endabschnitt der einander gegenüberliegenden Haupttragelemente 4 der benachbarten Rahmenstrukturmodule M1 - M4 vorgesehen ist. Die Verbindungselemente 6 sind in den Figuren als kurze Striche zwischen den Haupttragelementen 4 angedeutet.

Jedes Rahmenstrukturmodul M1 - M4 besitzt des weiteren aus Querträgern 8.2 und Längsträgern 8.4 gebildete Nebentragelemente 8, die einen geringfügigeren Anteil der auf das jeweilige Rahmenstrukturmodul M1 -M4 wirkenden statischen und dynamischen Belastungen aufnehmen. In den Figuren sind die Nebentragelemente 8 durch dünne durchgehende Linien angedeutet. Die Nebentragelemente 8 sind im vorliegenden Fall mit Hilfe von Schweißverbindungen an den zugeordneten Haupttragelementen 4 fixiert und zu einem rahmenartigen Gerüst zusammengesetzt, das unter anderem in Modulbreitenrichtung B und Modullängsrichtung die seitliche Randeinfassung der Tragrahmenstruktur 2 bildet. Die Nebentragelemente 8 benachbarter Rahmenstrukturmodule M1 - M4 sind über nicht dargestellte Verbindungsglieder, wie z.B. eine Schweißverbindung, Verschraubung oder Vernietung, miteinander verbindbar. Wie beispielsweise aus der Fig. 2 hervorgeht, sind besonders die längslaufenden Nebentragelemente 8.4 derart geformt und bemessen, das sich die einzelnen Module M1 - M4 in einem miteinander verbundenen Zustand zumindest teilweise überlappen beziehungsweise mit ihren Modulendabschnitten teilweise ineinandergreifen.

Das bezogen auf eine in der Fig. 1 durch einen Pfeil angedeutete Fahrtrichtung des Anhängefahrzeugs F vorderste Rahmenstrukturmodul M1 ist im vorliegenden Fall als Aufsattelmodul M1 ausgestaltet, das einen auf der Modullängsachse angeordneten Königszapfen 10 aufweist. Das Haupttragelement 4 des Aufsattelmoduls M1 ist als ein Einzelträgerelement 12 ausgebildet, das sich, wie in Fig. 2 gezeigt, im wesentlichen mittig in dem Modul M1 erstreckt und einen schlaufenförmigen Endabschnitt 12.2 besitzt, der den Königszapfen 10 umschließt. Primär mit Hilfe dieses Endabschnitts 12.2 werden auch die über den Königszapfen 10 auf die Tragrahmenstruktur 2 wirkenden Belastungen in das Einzelträgerelement 12 eingeleitet. In der Fig. 1 ist erkennbar, daß sich das Einzelträgerelement 12 zudem ausgehend von seinem hinteren Ende zu dem Königszapfen 10 hin verjüngt, so daß eine für das Aufliegen des Sattelaufliegers F auf einer Königsplatte des Sattelzugfahrzeugs vorbestimmte Rahmenhalshöhe entsteht. Wie ferner aus der Fig. 3 hervorgeht, die eine schematische Querschnittsansicht entlang der Linie III-III von Fig. 1 veranschaulicht, besitzt das Einzelträgerelement 12 einen im wesentlichen I-förmigen Querschnitt. Das für die Ankopplung an das benachbarte Rahmenstrukturmodul M2 vorgesehene lastübertragende Verbindungselement 6, sprich die weiter oben genannte Schweißnahtverbindung, ist an dem hinteren freien Ende des Einzelträgerelements 12 vorgesehen. Die zu einer rahmenartigen Struktur zusammengesetzten Nebentragelemente 8 des Aufsattelmodul M1 sind in einem oberen Bereich des Einzelträgerelements 12 angeordnet. Ein zweiteiliger Querträger 8.2 der Nebentragelemente 8 erstreckt sich im Bereich des Königszapfens 10 über im wesentlichen die gesamte Modulbreite B.

Das sich an das Aufsattelmodul M1 anschließende Rahmenstrukturmodul M2 ist als Palettenkastenmodul M2 ausgebildet und mit einem Haupttragelement 4 ausgestattet, das bei Betrachtung in der Draufsicht gemäß Fig. 2 eine im wesentlichen Doppel-T-förmige Gestalt besitzt, mit einem Längsschenkel 4.2, der sich mittig über im wesentlichen die gesamte Modullänge erstreckt, und einem Querschenkel 4.4, der sich im Bereich des hinteren Endes des Moduls M2 befindet. Der Fig. 1 ist zu entnehmen, daß dieses Haupttragelement 4 über seine gesamte Länge eine konstante Profilhöhe aufweist, die mit der Abmessung des freien hinteren Endes des Einzelträgerelements 12 des benachbarten Aufsattelmoduls M1 korrespondiert. Wie aus der Fig. 4 ersichtlich, die eine schematische Querschnittsansicht des Palettenkastenmoduls M2 entlang der Linie IV-IV von Fig. 1 zeigt, unterteilt der mit einem I-förmigen Profilquerschnitt versehene Längsschenkel 4.2 das Rahmenstrukturmodul M2 in zwei seitlich nebeneinander liegende, zur Unterbringung von Gegenständen, insbesondere von Paletten, geeignete Abteile 14, 14, deren Deckenstruktur 16 und Bodenstruktur 18 von einem Teil der Nebentragelemente 8 des Palettenkastenmoduls M2 gebildet wird. Die beiden Abteile 14, 14 sind jeweils durch eine seitliche Aufnahmeöffnung 20 zugänglich, die jeweils mittels einer verriegelbaren Klappe 22 verschließbar ist. Die Klappen 22 fungieren gleichzeitig als Unterfahrschutz. Das freie vordere Ende des Längsschenkels 4.2, das dem hinteren freien Ende des Einzelträgerelementes 12 des Aufsattelmoduls M1 genau gegenüberliegt, ist mit einem lastübertragenden Verbindungselement 6 ausgestattet, das mit dem entsprechenden Verbindungselement 6 des Aufsattelmoduls M1 korrespondiert, so daß beide Module M1, M2 fest und sicher miteinander verbindbar sind. Des weiteren erfolgt eine Verbindung der Nebentragelemente 8 dieser Rahmenstrukturmodule M1, M2. Überdies ist der Querschenkel 4.4 an seiner rückwärtigen Seitenfläche mit zwei in Modulbreitenrichtung B voneinander beabstandeten lastübertragenden Verbindungselementen 6 ausgestattet, die für die Ankopplung an das folgende benachbarte Rahmenstrukturmodul M3 vorgesehen sind.

Das sich an das Palettenkastenmodul M2 anschließende Rahmenstrukturmodul M3 ist als Fahrwerkmodul M3 ausgestaltet, das ein an dem Haupttragelement 4 befestigtes dreiachsiges Fahrwerk 24 mit Einfachbereifung aufweist. Das Haupttragelement 4 dieses Moduls verfügt, wie in der Fig. 2 besonders gut erkennbar, über zwei in Modulbreitenrichtung B voneinander beabstandete und über Zwischenquerträger 26 miteinander verbundene Längsträgerelemente 4.6, so daß sich eine insgesamt rahmenförmige Haupttragelementstruktur ergibt. Fig. 5 zeigt eine schematische Querschnittsansicht des Fahrwerkmoduls M3 entlang der Linie V-V von Fig. 1. Es ist erkennbar, daß die Längsträgerelemente 4.6 in diesem Ausführungsbeispiel einen I-förmigen Profilquerschnitt besitzen und die Nebentragelemente 8 im wesentlichen in einem oberen Bereich der Längsträgerelemente 4.6 angeordnet und an diesen fixiert sind. Die lastübertragenden Verbindungselemente 6 des Haupttragelements 4 des Fahrwerkmoduls M3 sind jeweils an den vorderen und hinteren Endabschnitten der Längsträger 4.6 angeordnet. Wie der Fig. 2 zu entnehmen, korrespondieren die vorderen Verbindungselemente 6 des Fahrwerkmoduls M3 mit den beiden in Modulbreitenrichtung B voneinander beabstandeten Verbindungselmenten 6 des Palettenkastenmoduls M2, so daß beide benachbarten Module M2, M3 fest und sicher miteinander verbindbar sind. Des weiteren erfolgt, wie bei allen anderen Modulen auch, eine Verbindung der Nebentragelemente 8 dieser beiden Rahmenstrukturmodule M2, M3. Im zusammengekoppelten Zustand ist das Palettenkastenmodul M2 also genau zwischen dem Aufsattelmodul M1 und dem Fahrwerkmodul M3 positioniert.

An das Fahrwerkmodul M3 wiederum schließt sich ein als Staukastenmodul M4 ausgestaltetes Rahmenstrukturmodul an, das im vorliegenden Beispiel den hinteren Endbereich der Tragrahmenstruktur 2 bildet. Das Staukastenmodul M4 dient zur Unterbringung von Ersatzrädern oder von anderen Gegenständen sowie zur Anbringung von weiteren Rahmenendteilen, wie z.B. einer Ladebordwand oder einer Halterung für einen Mitnahmestapler. Diese Teile sind in den Zeichnungen der Übersichtlichkeit halber nicht gezeigt. Wie in der Fig. 2 und in der Fig. 6 erkennbar, von denen letztere eine schematische Querschnittsansicht des Staukastenmoduls M4 entlang der Linie VI-VI von Fig. 1 illustriert, entspricht die Bauweise des Staukastenmoduls M4 im wesentlichen der des bereits zuvor erläuterten Palettenkastenmoduls M2. Wie der weiter oben erläuterte Modultyp M2, verfügt auch das Staukastenmodul M4 über ein T-förmig gestaltetes Haupttragelement 4 mit einem I-förmigen Profilquerschnitt, der über die Modullänge eine im wesentlichen konstante Höhe besitzt. Der Längsschenkel 4.2 des Haupttragelementes 4 unterteilt das Staukastenmodul M4 in zwei seitlich nebeneinander liegende Abteile 28. Die Deckenstruktur 30 und Bodenstruktur 32 dieser Abteile 28 wird wiederum von einigen der Nebentragelemente 8 des Staukastenmoduls M4 gebildet. Zwei seitliche Aufnahmeöffnungen 34 des Staukastenmoduls M4 sind durch verriegelbare Klappen 36 verschließbar, die gleichzeitig als Unterfahrschutz fungieren. Die an dem hier in Fahrtrichtung nach vorn weisenden Querschenkel 4.4 des Haupttragelementes 4 vorgesehenen lastübertragenden Verbindungselemente 6 korrespondieren mit den hinteren Verbindungselementen 6 des Fahrwerkmoduls M3, so daß beide benachbarten Module M3, M4 fest und sicher miteinander verbindbar sind. Des weiteren erfolgt eine Verbindung der Nebentragelemente 8 dieser beiden Rahmenstrukturmodule M3, M4.

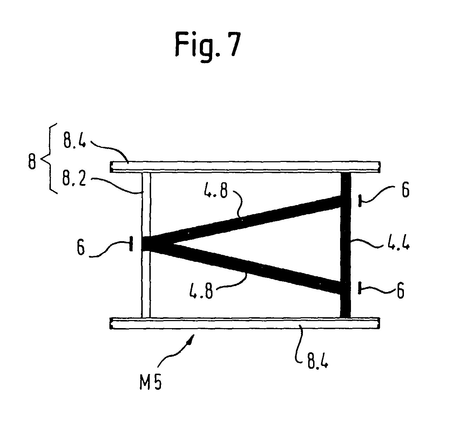

Fig. 7 zeigt eine schematische Draufsicht eines als Zwischenmodul M5 ausgestalteten Rahmenstrukturmoduls des erfindungsgemäßen Anhängefahrzeugs F. Dieses Zwischenmodul M5 ist grundsätzlich zwischen zwei beliebige benachbarte Rahmenstrukturmodule einfügbar, im vorliegenden Fall also zwischen das vorderste Rahmenstrukturmodul M1, nämlich das Aufsattelmodul M1, und das Palettenkastenmodul M2, und/oder zwischen das Palettenkastenmodul M2 und das Fahrwerkmodul M3, und/oder zwischen das Fahrwerkmodul M3 und das Staukastenmodul M4, und/oder zwischen einem dieser Module M1 - M4 und einem weiteren Zwischenmodul M5ₓ, sofern vorhanden. Es ist indes zu beachten, daß die Gestaltung des Haupttragelementes 4 des Zwischenmoduls M5 sowie die Anordnung seiner lastübertragenden Verbindungselemente 6 entsprechend auf die Haupttragelemente 4, 12 und die Anordnung der lastübertragenden Verbindungselemente 6 derjenigen Rahmenstrukturmodule abzustimmen ist, die über das Zwischenmodul M5 zu einer Tragrahmenstruktur 2 oder einer Einheit davon zu verbinden sind. Ein gleiches gilt für die Nebentragelemente 8. Da in der vorliegenden Ausführungsvariante des Zwischenmoduls M5 das Haupttragelement 4 bei Betrachtung des Zwischenmoduls M5 in der Draufsicht eine im wesentlichen dreieckige Gestalt besitzt, mit einem an einem hinteren Modulbereich angeordneten Querschenkel 4.4 und zwei sich jeweils an den Querschenkel 4.4 anschließenden und zu einer in der Art eines Einzelträgerabschnitts ausgebildeten Spitze zusammenlaufenden Längsschenkeln 4.8, könnten über dieses Zwischenmodul M5 beispielsweise das Aufsattelmodul M1 und das Fahrwerkmodul M3 miteinander verbunden werden. Hierbei würde mit Hilfe der jeweils miteinander korrespondierenden lastübertragenden Verbindungselemente 6 das hintere freie Ende des Einzelträgerelementes 12 des Aufsattelmoduls M1 mit der vorderen Spitze der zusammenlaufenden Längsschenkel 4.8 des Zwischenmoduls M5 und die beiden vorderen Enden der Längsträgerelemente 4.6 des Fahrwerkmoduls M3 mit dem hinteren Querschenkel 4.4 des Zwischenmoduls M5 verbunden.

Die Erfindung ist nicht auf das obige bevorzugte Ausführungsbeispiel, das lediglich der allgemeinen Erläuterung des Kerngedankens der Erfindung dient, beschränkt. Im Rahmen des Schutzumfangs kann das erfindungsgemäße Anhängefahrzeug vielmehr auch eine andere als die oben beschriebene Ausgestaltungsform annehmen. Das Anhängefahrzeug kann hierbei insbesondere Merkmale aufweisen, die eine Kombination aus den jeweiligen Einzelmerkmalen der Ansprüche darstellen. Insbesondere ist es denkbar, daß die Haupttragelemente der einzelnen Rahmenstrukturmodule M1 - M5 von dem obigen Beispiel abweichende Formen und/oder Profilquerschnitte aufweisen und ein jeweiliges Rahmenstrukturmodul mit einem anderen als dem oben geschilderten Haupttragelementtyp ausgestattet ist. Auch ist es im Sinne der Erfindung denkbar, die Form und Abmessung eines jeweiligen einzelnen Rahmenstrukturmodultyps zu variieren. Darüber hinaus kann jedes Rahmenstrukturmodul mit weiteren Anbauteilen und/oder Einrichtungen versehen sein, die für die Funktion des Anhängefahrzeugs erforderlich sind. Anstelle oder zusätzlich zu den oben erläuterten lastübertragenden Verbindungselementen sind selbstverständlich auch Verbindungselemente einsetzbar, die eine lösbare Verbindung der Rahmenstrukturmodule gestatten.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Tragrahmenstruktur
- 4: Haupttragelement(e)
- 4.2: Längsschenkel von 4
- 4.4: Querschenkel von 4
- 4.6: Längsträgerelemente von 4
- 4.8: Zusammenlaufende Längsschenkel von 4
- 6: Verbindungselemente (lastübertragende -)
- 8: Nebentragelemente
- 8.2: Querträger von 8
- 8.4: Längsträger von 8
- 10: Königszapfen von M1
- 12: Einzelträgerelement (Haupttragelement)
- 12.2: Schlaufenförmiger Endabschnitt von 12
- 14: Abteile von M2
- 16: Deckenstruktur von 14
- 18: Bodenstruktur von 14
- 20: Seitliche Aufnahmeöffnungen von 14, M2
- 22: Verriegelbare Klappen / Unterfahrschutz von M2
- 24: Fahrwerk von M3
- 26: Zwischenquerträger
- 28: Abteile von M4
- 30: Deckenstruktur von 28
- 32: Bodenstruktur von 28
- 34: Aufnahmeöffnungen (seitliche -) von 28, M4
- 36: Verriegelbare Klappen / Unterfahrschutz von M4

- B: Modulbreite / Modulbreitenrichtung
- F: Anhängefahrzeug
- M1: Aufsattelmodul (Rahmenstrukturmodul)
- M2: Palettenkastenmodul (Rahmenstrukturmodul)
- M3: Fahrwerkmodul (Rahmenstrukturmodul)
- M4: Staukastenmodul (Rahmenstrukturmodul)
- M5: Zwischenmodul (Rahmenstrukturmodul)

## Patentansprüche

1. Anhängefahrzeug (F) mit einer langgestreckten Tragrahmenstruktur (2),
**dadurch gekennzeichnet, daß**
die Tragrahmenstruktur (2) modulartig (M1, M2, M3, M4, M5) aufgebaut ist und mindesten zwei vorgefertigte Rahmenstrukturmodule (M1, M2, M3, M4, M5) aufweist, die miteinander verbunden (6) sind.

2. Anhängefahrzeug nach Anspruch 1,
**dadurch gekennzeichnet, daß**
jedes Rahmenstrukturmodul (M1, M2, M3, M4, M5) mindestens ein langgestrecktes Haupttragelement (4, 12) besitzt, das einen wesentlichen Anteil einer auf das Rahmenstrukturmodul (M1, M2, M3, M4, M5) wirkenden Belastung aufnimmt, und das mit mindestens einem lastübertragenden Verbindungselement (6) versehen ist, welches an wenigstens ein korrespondierendes Verbindungselement (6) des jeweils benachbarten Rahmenstrukturmoduls (M1, M2, M3, M4, M5) anschließbar ist.

3. Anhängefahrzeug nach Anspruch 2,
**dadurch gekennzeichnet, daß**
sich das Haupttragelement (4, 12) über im wesentlichen die gesamte Modullänge erstreckt.

4. Anhängefahrzeug nach Anspruch 2 oder 3,
**dadurch gekennzeichnet, daß**
das Haupttragelement (4) als ein Einzelträgerelement (12) ausgebildet ist, das sich im wesentlichen mittig in dem Rahmenstrukturmodul (M1) erstreckt.

5. Anhängefahrzeug nach Anspruch 4,
**dadurch gekennzeichnet, daß**
das mittige Einzelträgerelement (12) wenigstens einen gabel-, klauen- oder schlaufenförmigen Endabschnitt (12.2) besitzt.

6. Anhängefahrzeug nach Anspruch 2 oder 3,
**dadurch gekennzeichnet, daß**
das Haupttragelement (4) rahmenförmig ausgestaltet ist.

7. Anhängefahrzeug nach Anspruch 2 oder 3 oder 6,
**dadurch gekennzeichnet, daß**
das Haupttragelement (4) wenigstens zwei in Modulbreitenrichtung (B) voneinander beabstandete Längsträgerelemente (4.6) aufweist.

8. Anhängefahrzeug nach Anspruch 2 oder 3,
**dadurch gekennzeichnet, daß**
das Haupttragelement (4) bei Betrachtung des Rahmenstrukturmoduls (M2, M4) in der Draufsicht eine im wesentlichen T-förmige Gestalt besitzt, mit mindestens einem Längsschenkel (4.2), der sich mittig über im wesentlichen die gesamte Modullänge erstreckt, und einem Querschenkel (4.4), der in einem vorderen und/oder hinteren Modulbereich angeordnet ist.

9. Anhängefahrzeug nach Anspruch 2 oder 3,
**dadurch gekennzeichnet, daß**
das Haupttragelement (4) bei Betrachtung des Rahmenstrukturmoduls (M5) in der Draufsicht eine im wesentlichen dreieckige oder trapezförmige Gestalt besitzt, mit einem an einem vorderen oder hinteren Modulbereich angeordneten Querschenkel (4.4) und zwei sich jeweils an den Querschenkel (4.4) anschließenden, zusammenlaufenden Längsschenkeln (4.8).

10. Anhängefahrzeug nach einem oder mehreren der Ansprüche 2, 3, 4, 6, 7, 8, 9,
**dadurch gekennzeichnet, daß**
das mindestens eine lastübertragende Verbindungselement (6) an einem vorderen und/oder hinteren Endabschnitt des Haupttragelementes (4) vorgesehen ist.

11. Anhängefahrzeug nach Anspruch 2 oder 10,
**dadurch gekennzeichnet, daß**
das lastübertragende Verbindungselement (6) eine Schweiß- und/oder Schraub- und/oder Bolzen- und/oder Nietverbindung ist.

12. Anhängefahrzeug nach einem oder mehreren der vorhergenannten Ansprüche,
**dadurch gekennzeichnet, daß**
jedes Rahmenstrukturmodul (M1, M2, M3, M4, M5) mindestens ein Nebentragelement (8; 8.2, 8.4) besitzt, das einen geringfügigeren Anteil der auf das jeweilige Rahmenstrukturmodul (M1, M2, M3, M4, M5) wirkenden Belastung aufnimmt.

13. Anhängefahrzeug nach Anspruch 1, in Form eines Sattelaufliegers,
**dadurch gekennzeichnet, daß**
das erste Rahmenstrukturmodul als ein in Fahrtrichtung vorderstes Aufsattelmodul (M1) ausgestaltet ist, das einen Königszapfen (10) aufweist, der mit dem Haupttragelement (4; 12) verbunden ist.

14. Anhängefahrzeug nach Anspruch 1, in Form eines Deichselanhängers,
**dadurch gekennzeichnet, daß**
das erste Rahmenstrukturmodul (M1) als ein in Fahrtrichtung vorderstes Deichselmodul ausgestaltet ist, das eine starre oder gelenkig ankuppelbare Deichsel aufweist.

15. Anhängefahrzeug nach einem oder mehreren der vorhergenannten Ansprüche,
**dadurch gekennzeichnet, daß**
das zweite Rahmenstrukturmodul als Fahrwerkmodul (M3) ausgestaltet ist, das ein an dem Haupttragelement (4) befestigtes ein- oder mehrachsiges Fahrwerk (24) aufweist.

16. Anhängefahrzeug nach einem oder mehreren der vorhergenannten Ansprüche,
**dadurch gekennzeichnet, daß**
die Tragrahmenstruktur (2) wenigstens ein drittes Rahmenstrukturmodul besitzt, das als Palettenkastenmodul (M2) ausgestaltet ist.

17. Anhängefahrzeug nach Anspruch 16,
**dadurch gekennzeichnet, daß**
das Palettenkastenmodul (M2) zwischen dem ersten Rahmenstrukturmodul (M1) und dem Fahrwerkmodul (M3) angeordnet ist.

18. Anhängefahrzeug nach Anspruch 16 oder 17,
**dadurch gekennzeichnet, daß**
das Palettenkastenmodul (M2) zwei seitliche Aufnahmeöffnungen (20) besitzt.

19. Anhängefahrzeug nach einem oder mehreren der vorhergenannten Ansprüche,
**dadurch gekennzeichnet, daß**
die Tragrahmenstruktur (2) des wenigstens ein viertes Rahmenstrukturmodul besitzt, das als Staukastenmodul (M4) ausgestaltet ist.

20. Anhängefahrzeug nach Anspruch 19,
**dadurch gekennzeichnet, daß**
das Staukastenmodul (M4) an dem Fahrwerkmodul (M3) angeordnet ist.

21. Anhängefahrzeug nach Anspruch 19 oder 20,
**dadurch gekennzeichnet, daß**
das Staukastenmodul (M4) zwei seitliche und/oder zwei hintere Aufnahmeöffnungen (34) besitzt.

22. Anhängefahrzeug nach einem oder mehreren der vorhergenannten Ansprüche,
**dadurch gekennzeichnet, daß**
die Tragrahmenstruktur (2) wenigstens ein fünftes Rahmenstrukturmodul besitzt, das als Zwischenmodul (M5) ausgestaltet ist.

23. Anhängefahrzeug nach Anspruch 22,
**dadurch gekennzeichnet, daß**
das Zwischenmodul (M5) zwischen
- dem Fahrwerkmodul (M3) und dem Staukastenmodul (M4), und/oder
- dem Fahrwerkmodul (M3) und dem Palettenkastenmodul (M2), und/oder
- dem Palettenkastenmodul (M2) und dem ersten Rahmenstrukturmodul (M1) angeordnet ist.
